# EUROPEAN PATENT SPECIFICATION

(11) **EP 1 756 988 B1**
(45) Date of publication and mention of the grant of the patent: **05.01.2011**
(21) Application number: 05762318.3
(22) Date of filing: 01.06.2005
(51) Int. Cl.: H04J 3/06

(54) **SYSTEM AND METHOD FOR ROUTING ASYNCHRONOUS SIGNALS**
SYSTEM UND VERFAHREN ZUM ROUTEN ASYNCHRONER SIGNALE
SYSTEME ET PROCEDE D'ACHEMINEMENT DE SIGNAUX ASYNCHRONES

(30) Priority: 16.06.2004 US 580188 P; 16.06.2004 US 580189 P
(43) Date of publication of application: 28.02.2007
(73) Proprietor: Thomson Licensing, 92130 Issy-les-Moulineaux (FR)
(72) Inventor: CHRISTENSEN, Carl, South Jordan, Utah 84095 (US); BYTHEWAY, David, Lynn, Murray, Utah 84123 (US); ARBUCKLE, Lynn, Howard, Bountiful, Utah 84010 (US); REDONDO, Randall, Geovanny, Holladay, Utah 84117 (US)
(74) Representative: Heuer, Wilhelm
(86) International application number: PCT/US2005/019115
(87) International publication number: WO 2006/009605

(56) References cited:
- EP-A- 0 530 393
- WO-A-2004/002089
- US-A- 4 322 580
- US-A- 4 794 596
- US-A- 5 479 648
- US-A- 6 121 816
- US-A1- 2002 126 783
- US-A1- 2003 052 886
- US-B1- 6 658 580

## Description

### FIELD OF THE INVENTION

This invention relates to routers and more specifically to broadcast routers that route asynchronous signals.

### BACKGROUND OF THE INVENTION

A router comprises a device that routes one or more signals appearing at the router input(s) to one or more outputs. Routers used in the broadcast industry typically employ at least a first router portion with a plurality of router modules (also referred to as matrix cards) coupled to at least one expansion module. The expansion module couples the first router chassis to one or more second router portion to allow further routing of signals. Many broadcast routers, and especially those that are linearly expandable, route asynchronous signals. Asynchronous signal routing by such linearly expandable routers requires an accurate clock signal throughout the entire route to preserve the integrity of routed data. For an asynchronous signal, a difference in clock frequency from one location to another can cause corruption of the signal and loss of the data represented by that signal. Even a difference in clock frequencies as small as 1 part per million (PPM) can have an undesirable effect on data. Typical examples of data corruption include repeated or dropped signal samples.

As linearly expandable routers increase in complexity, the problem of supplying an accurate and synchronized clock signal to various elements becomes more difficult. For purposes of discussion, a clock signal constitutes a signal that oscillates between a high and a low state at defined intervals. Typical clock signals oscillate with a 50% duty cycle. However, clocks having other duty cycles are also commonly employed. Circuits using clock signals for synchronization become active upon one of the rising or falling edge of the clock signal.

A so-called, "clock multiplexer" refers to a circuit, as typically exists within a linearly expandable router, for selecting at least one clock signal from a plurality of available clock signals. The selected clock signal(s) serve to trigger other elements. When selecting among available clock signals, the output signal selected by the clock multiplexer should not include any undefined pluses. Undefined pulses occur, for example, when a selected clock signal undergoes a disruption. Such a disruption can include a missing clock signal as well as a clock signal that fails to switch states as expected. Some times, an input clock signal will remain "stuck" indefinitely at one logic state or the other. Such disruptions frequently produce undefined pulses including runt pulses, short pulses, pulses of indefinite duration, glitches, spikes and the like.

WO 2004/002089 discloses a router comprising a clock selector (506) for selecting from among first and second clock signals based in part on whether at least one of the first and second clock signals has toggled. If both clock signals fail, no clock can be selected, and the router fails completely.

US 4 794 596 discloses a synchronized data network in which a clock selector is adapted to select between a plurality of master clocks, and in case of failure of these, a local auxiliary clock.

US4322580 (Khan et al.; published on 30. March 1982) discloses a clock multiplexer with selection out of plural input clock signals. The selection is controlled by monitoring the toggling of each on the input clock signals. Input clock lines of which the signals do not toggle, e.g. due to a failure, are fixed to ground zero level. Toggling is monitored by a monostable multivibrator MV. MV is dimensioned to provide the logic zero as soon as 2 clock pulses are missing.

Prior art attempts to avid undefined pulses at the output of a clock multiplexer include so-called "safe" clock multiplexers. A typical safe clock multiplexer switches from a presently selected input to a next selected input in an orderly manner. Thus, a safe multiplexer does not switch until the selected input clock signal transitions to a known state and the subsequently selected clock signal transitions to the same state as the previously selected clock signal.

However, prior art safe clock multiplexers have drawbacks. For example, when a presently selected clock signal fails to transition to a known state, a safe clock multiplexer will often lack the ability to switch to another clock signal. Prior art safe clock multiplexers have not tolerated these and other types of clock disruptions.

Thus, a need exists for a technique for providing a selected one of a set of clock signals, such as within a linearly expandable router, that overcomes the aforementioned disadvantages

### SUMMARY OF THE INVENTION

Briefly in accordance with a preferred embodiment of the present principles, there is provided a method for selecting a clock signal from among at least first and second clock signals. The method commences by detecting a failure of a first clock signal to change state and by detecting a failure of a second clock signal to change state. A selection occurs from among the first and second clock signals and an oscillator signal, based in part on whether at least one of the first and second clock signals has toggled

### BRIEF DESCRIPTION Of THE DRAWINGS

FIGURE 1 illustrates a block schematic diagram of a router according to an illustrative example of the present principles:

FIGURE 2 illustrates a first alternate arrangement of input and output modules for the router of FIG. 1

FIGURE 3 illustrates a second alternate arrangement of input and output modules for the router of FIG. 1;

FIGURE 4 illustrates a third alternate arrangement of input and output modules for the router of FIG. 1

FIGURE 5 illustrates a first network of clock selector circuits for use in the router of FIG. 1;

FIGURE 6 depicts a second network of clock selector circuits for use in the router of FIG. 1

FIGURE 7 depicts a block schematic diagram of an illustrative embodiment of a clock selector circuit within the networks of FIGS. 5 and 6; and

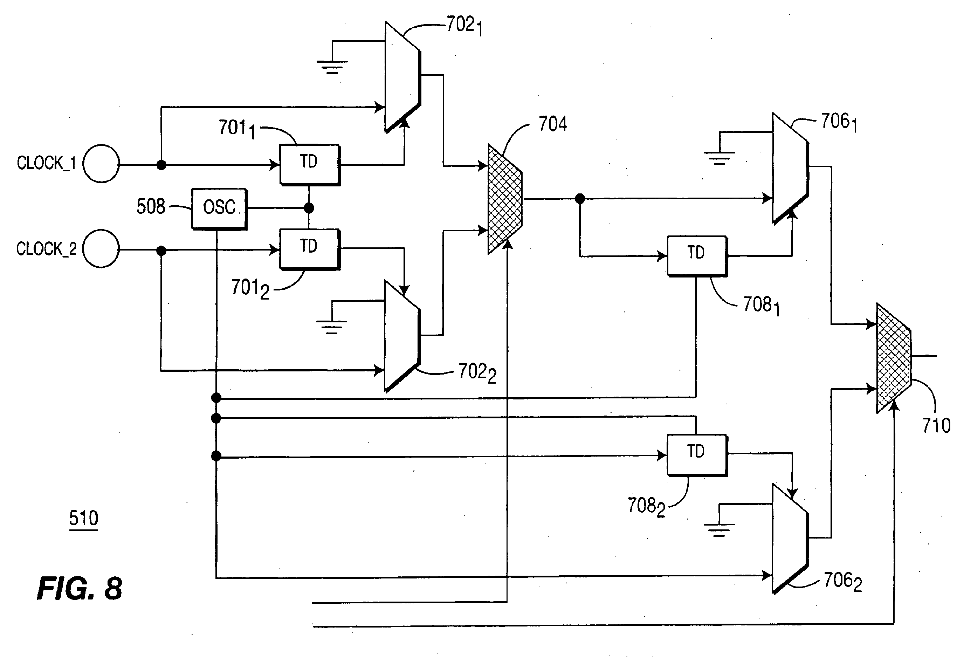

FIGURE 8 depicts a safe clock multiplexer system of for use in the selector circuit of FIG. 4.

### DETAILED DESCRIPTION

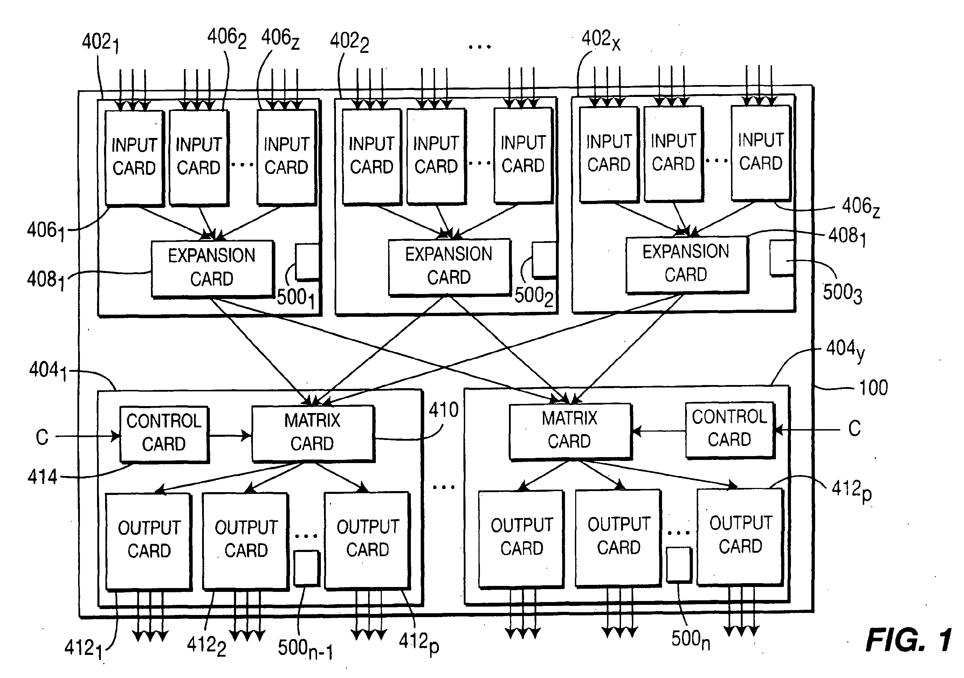

FIGURE 1 depicts a block schematic of a broadcast router 100 in accordance with a preferred example of the present principles. In a preferred example, the router 100 comprises at least one, and preferably a plurality of input modules 402₁, 402₂...402ₓ where x is an integer greater than zero, and at least one, and preferably, a plurality of output modules 404₁...404_{y}, where y is an integer. Each input module, such as input module 402₁, comprises at least one, and preferably a plurality of input cards 406₁, 406₂...406_{z} where z is an integer greater than zero. Each input card has at least one, and preferably, a plurality of inputs for receiving signals for multiplexing into an output signal. Different input cards typically have different signal receiving capabilities to afford the ability to receive signals from a variety of sources. An expansion card 408 within each input module, such as module 402₁, multiplexes the output signals from the input cards 406₁-406_{z} into an output signal.

Each second module, such as second module 404₁, has a matrix 410 card which de-multiplexes the input signals from one or more of the input modules for delivery to at least one, and preferably a plurality of output cards 412₁, 412₂...412*ₚ*, where *p* is an integer greater than zero. Each output card delivers one or more output signals to one or more external devices (not shown). A control card 414 controls the matrix card 410 in response to an external control signal C to cause the matrix card to route its output signal among various of the output cards 412₁-412*ₚ*. In this way, the matrix card 410 can effectuate routing based on the external control signal C.

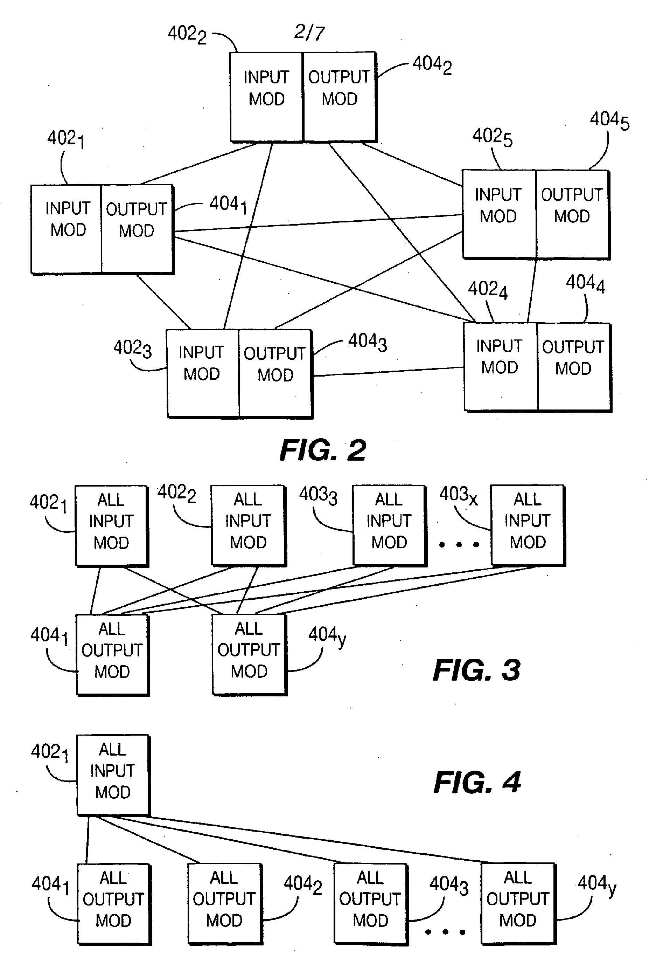

The router 100 of FIG. 1 has each of its input modules 402₁, 402₂...402ₓ coupled to each of the output modules 404₁, 402_{2.}..404_{y}. Other arrangements are possible. FIGURE 2 illustrates a first alternate arrangement of input and output cards for the router 100 of FIG. 1 wherein the input and output modules are arranged to provide the same number of inputs and outputs. FIGURE 3 illustrates a second alternate arrangement of input and output modules for the router 100 of FIG. 1 in which there are more inputs than outputs. FIGURE 4 illustrates a third alternate arrangement of input and output modules for the router 100 of FIG. 1 in which there are more outputs than inputs.

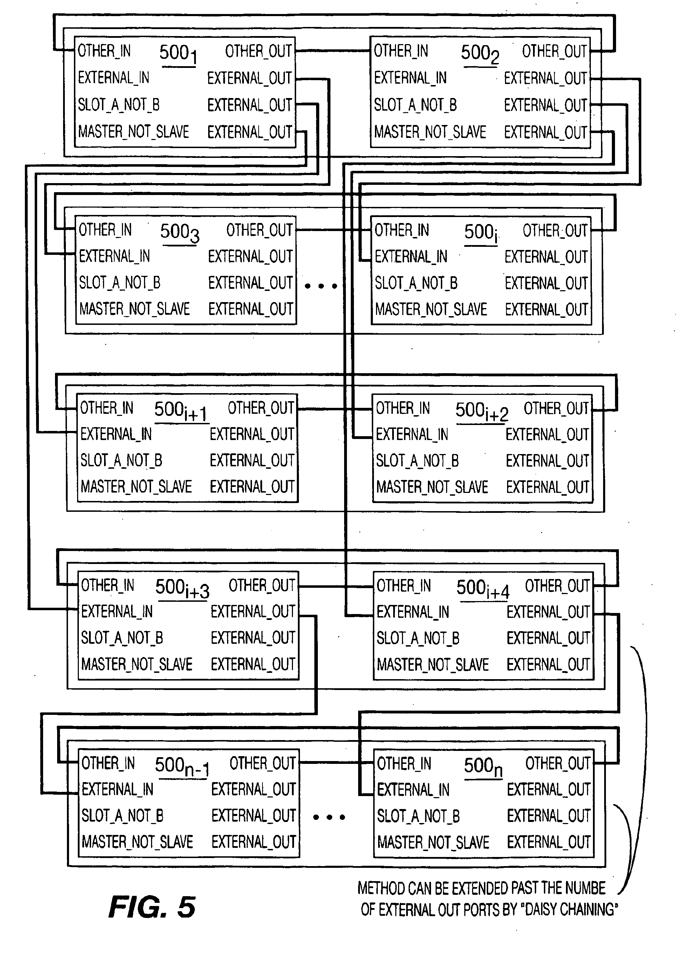

The input modules 402₁-402ₓ and the output modules 404₁-404_{y} of FIG. 1 typically each include at least one of clock modules 500₁-500ₙ where *n* ≥ *x* + *y*, with each clock module having a structure as described in greater detail with respect to FIG. 5. In practice, separate clock modules can exist in within one or more the elements within each input and output module of FIG. 1. Moreover, one or more clock modules 500₁-500ₙ could exist as separate modular elements in the router 100, much like one of the input or output modules.

Referring to FIG. 5, the clock modules 500₁-500ₙ can interconnect with each other in a daisy chain fashion to yield a network 600 of clock modules. In the embodiment of FIG. 5, the clock module 500₁ supplies its clock signal to the clock module 500₂ as well as each of clock modules 500₃, 500_{*i*+*1*} and 500_{*i*+*3*}, where *i* ≤ *n*, whereas the clock module 500₂ supplies its clock signal to each of modules 500*ᵢ*, 500*ᵢ₊₂* and 500*ᵢ₊₄*. Each of the clock modules 500₁, 500₂...500ₙ also receives the clock signal from a preceding one of clock modules 500₂...500*ᵢ*...500*ₙ₋₁*, respectively.

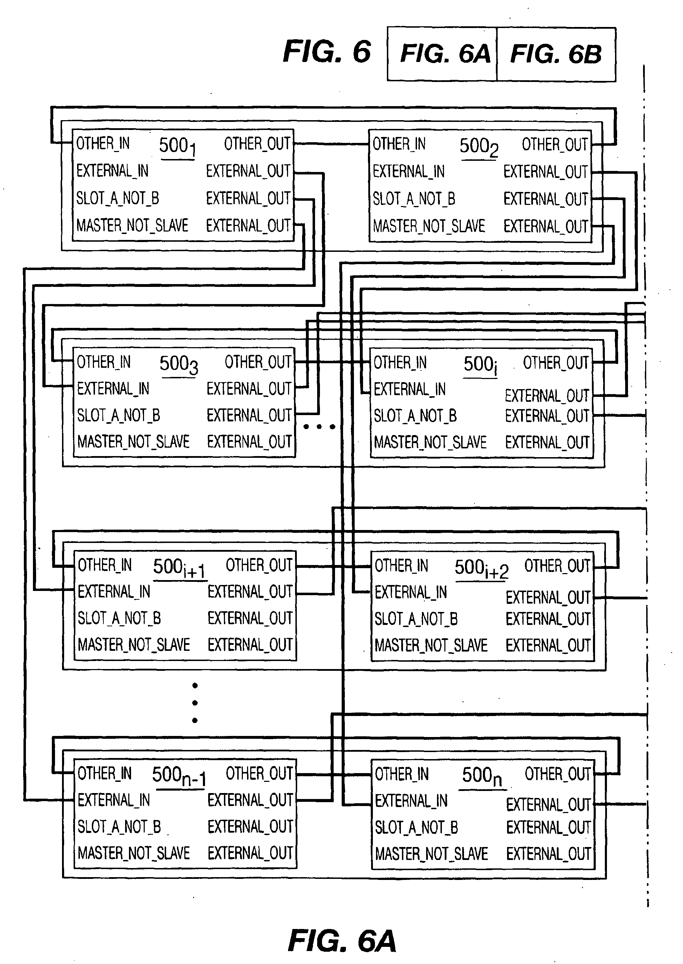

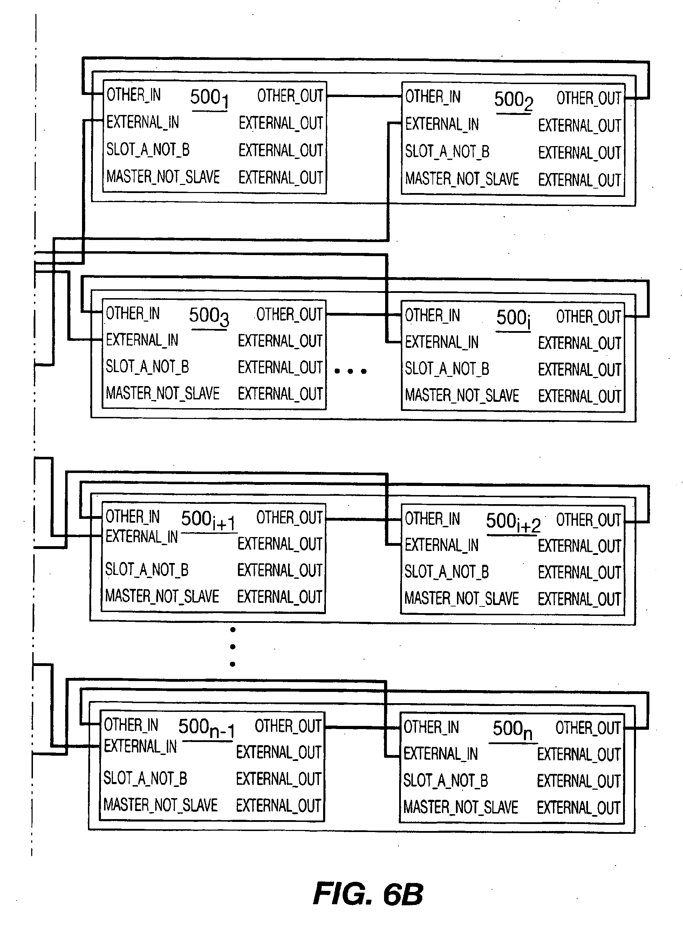

FIGURE 6 depicts an alternate arrangement of clock modules wherein the modules are arranged in first and second networks 600₁ and 600₂, with each of the networks 600₁ and 600₂ configured similarly to the clock module network 600 of FIG. 2. As seen in FIG. 6, one or more of the individual clock modules 500₁-500ₙ of network 600₁ provide clock signals to one or more of the clock modules 500₁-500ₙ of network 600₂.

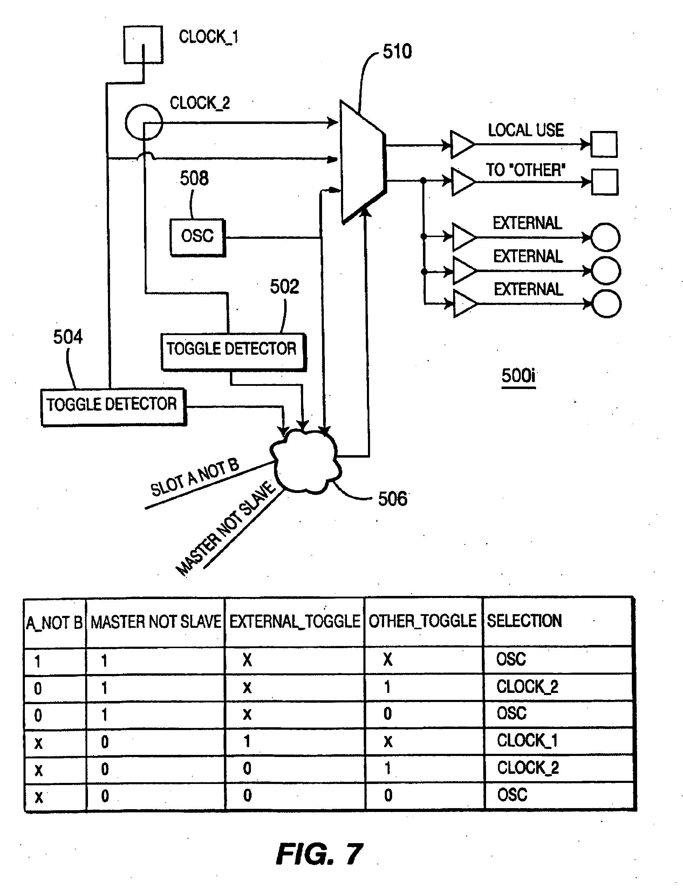

FIGURE 7 depicts a block schematic diagram of an exemplary clock module 500*ᵢ*. The clock module 500*ᵢ* of FIG. 4 includes first and second clock inputs that receive first and second clock signals Clock_1 and Clock_2, respectively. Each of the external clock signals Clock_1 and Clock_2 can comprise clock signals from a separate upstream clock selector circuit in the network of FIG 2 or a clock signal from a reference clock circuit formed by an oscillator 508.

The clock selector circuit 500*ᵢ* includes a pair of toggle detectors 502 and 504 which each receive a separate one of the Clock_1 and Clock_2 signals. Each toggle detector provides an output signal indicative of whether its respective input clock signal has toggled, i.e., a changed from one state to another. A logic block 506 receives the output signals of the toggle detectors 502 and 504, along with the output of an oscillator circuit 508 that generates a clock signal useful for meeting the timing requirements of various circuit elements. The logic block 506 also receives two external status signals; (1) A_not B and (2) Master_not Slave. The state of the status signal A_not B indicates whether or not the clock circuit 500*ᵢ* will provide the primary clock signal. The state of the Master_not Slave signal determines whether the clock circuit 500*ᵢ* operates as its own master, or as a slave to another clock signal.

The logic block 506 generates an output control for controlling a safe clock multiplexer system 510 to select among the clock signals Clock_1, Clock_2 and the output signal of the oscillator 508, to provide a single clock signal to downstream elements (not shown). The output control signal of the logic block 506 has a prescribed relationship to the logic circuit input signals as shown in Table 1, with the "x" entries constituting "don't care" values. (In other words, the value of the particular input signal has no effect on the output of the logic block 506.)

**TABLE I**

| A_not B | Master_Not Slave | Toggle Detector 504 | Toggle Detector 502 | Safe clock multiplexer system 510 Output |
|---|---|---|---|---|
| 1 | 1 | x | x | Oscillator 508 |
| 0 | 1 | x | 1 | Clock_2 |
| 0 | 1 | x | 0 | Oscillator 508 |
| x | 0 | 1 | x | Clock_1 |
| x | 0 | 0 | 1 | Clock_2 |
| x | 0 | 0 | 0 | Oscillator 508 |

As seen from Table 1, for so long as the Master_ Not Slave signal remains at a logic "1" level, the clock circuit 500*ᵢ* only selects between Clock_2 and Oscillator 508. Under such conditions, the toggling of the Clock_1 signal, and hence the output signal of the toggle detector 504 has no effect. Conversely, when the clock circuit 500*ᵢ* serves as a slave (i.e., the Master_ Not Slave signal remains at a logic "0" level), the output states of the toggle detector 504, and the output state of the toggle detector 502, determine which of the Clock_1, Clock_2, and oscillator 508 signals appear at the output of the safe clock multiplexer system 510. The clock signal selected by the safe clock multiplexer system 510 provides a timing signal for local use as well as for input to elements within the router 100 of FIG. 1.

In a preferred embodiment, the safe clock multiplexer system 510 of FIG. 4 has the structure shown in FIG. 5 to afford the clock module 500*ᵢ* of FIG. 3 the ability to tolerate an input clock pulse that has become stuck. Within the safe clock multiplexer system 510 of FIG. 5, first and second toggle detectors 701₁ and 701₂ receive the Clock_1 and Clock_2 signals, respectively, as do each of a pair of multiplexers 702₁ and 702₂, respectively. Each of the multiplexers 702₁ and 702₂ receives a signal and a logic "0" level at its second input.

The toggle detectors 701₁ and 701₂ control the multiplexers 702₁ and 702₁ in accordance with the state of Clock_1 and Clock_2 signals, respectively, as measured against the output signal of the oscillator 508. In other words, each of the toggle detectors 701₁ and 701₂ determines whether a respective one of the Clock_1 and Clock_2 signals has changed state (i.e., toggled) relative to the output signal of the oscillator 508. If a respective one of the toggle detectors 701₁ and 701₂ determines that a corresponding one of the Clock_1 and Clock_2 signals has toggled relative to the oscillator 508 output signal, then that toggle detector gates a corresponding one of the multiplexers 702₁ and 702₂. When gated, each of the multiplexers 702₁ and 702₂ passes an associated one of the Clock_1 and Clock_2 signals. Should a respective one of the clock signals Clock_1 and Clock_2 not toggle relative to the oscillator 508 output signal, then the corresponding one of the multiplexers 702₁ and 702₂ will output a logic zero level signal.

A multiplexer 704 receives at its first and second inputs the output signals of the multiplexers 702₁ and 702₂, respectively. In accordance with a signal from the logic block 506 of FIG. 4, the multiplexer passes the output signal of one of the multiplexers 702₁ and 702₂ to a first input of a multiplexer 706₁ and to the input of a toggle detector 708₁. The multiplexer 706₁ has its second input supplied with a signal at a logic zero level.

The toggle detector 708₁ controls the multiplexer 706₁ in accordance with the relationship between the output signal of the multiplexer 704 and the output signal of the oscillator 508. In other words, the toggle detector 708₁ determines whether the output signal of the multiplexer 704 has changed state relative to the output signal of the oscillator 508. If the output signal of the multiplexer 704 toggles relative to the oscillator 508 output signal, then the toggle detector 708₁ causes the multiplexers 706₁ to pass the output signal of the multiplexer 704. Otherwise, should the output signal of the multiplexer 704 not toggle relative to the output signal of the oscillator 508, the multiplexer 706₁ will output a logic zero level signal.

A multiplexer 706₂ receives at its first and second inputs the output signal of the oscillator 508 and a logic zero level signal, respectively. A toggle detector 708₂ controls the multiplexer 706₂ in accordance with the oscillator 508 output signal. In other words, the toggle detector 708₂ determines whether the output signal of the oscillator 508 periodically changes state. If the oscillator 508 output signal does toggle, then the toggle detector 708₂ gates the multiplexer 706₂ to pass the output signal of the oscillator 508. Otherwise, should the output signal of the oscillator 508 not toggle, then the multiplexer 706₂ will output a logic zero level signal.

A multiplexer 710 receives at its first and second inputs the output signals of the multiplexers 706₁ and 706₂, respectively. Like the multiplexer 704, the multiplexer 710 operates under the control of the logic block 506 of FIG. 4. Thus, depending on output signal of the logic block 506, the multiplexer 710 will either output a selected one of the Clock_1 and Clock_2 signals (assuming at least one has toggled relative to the oscillator 508 output signal) or the output signal of the oscillator 508 (assuming it has toggled.)

An important distinction exists between the multiplexers 702₁ and 702₂ and the multiplexers 704 and 710. The multiplexers 704 and 710 serve as clock multiplexers as described earlier. Advantageously, described, the safe clock multiplexer system 510 of FIG. 5 precludes the possibility of a missing clock pulse. By controlling the passage of the Clock_1 and Clock_2 signals relative to the oscillator 508 output signal and by controlling the passage of the oscillator 508 output only if it has toggled, the safe clock multiplexer system 510 avoids a situation in which any or all of the clocks become stuck in a no-clock state.

The foregoing describes a clock selector circuit 500*ᵢ*, including a safe multiplexer system 510, for distributing clock pulses so as to provide for redundancy while assuring clock synchronism.

## Claims

1. Apparatus comprising:
a clock selector (506) for selecting from among first and second clock signals (Clock_1, Clock_2), and an oscillator (508) signal, as a common output clock signal, based on whether at least one of the first and second clock signals (Clock_1, Clock_2) has toggled,
a safe clock multiplexer system (502, 504, 510) for detecting whether each of the first and second clock signals (Clock_1, Clock_2) has toggled compared to the oscillator (508) signal, and if not replacing said each non-toggling clock signal (Clock_1, Clock_2) with a signal at the same fixed logic state.

2. The apparatus according to claim 1 wherein the safe clock multiplexer circuit (502, 504, 510) includes a pair of toggle detectors (502, 504), each determining whether a separate one of the first and second clock signals (Clock_1, Clock_2) has toggled compared to the oscillator (508) signal.

3. The apparatus according to claim 1 wherein the clock selector circuit (506) selects from among said first and second clock signal (Clock_1, Clock_2), and the oscillator (508) signal, as a common output clock signal, based in part on whether at least one of the first and second clock signals (Clock_1, Clock_2) has toggled and whether the clock selector circuit (506) serves as a master or as a slave to another clock selector circuit.

4. The apparatus according to claim 1 wherein the clock selector circuit (506) selects from among said first and second clock signal (Clock_1, Clock_2), and the oscillator (508) output signal, as a common output clock signal, based in part on:
i) whether at least one of the first and second clock signals (Clock_1, Clock_2) has toggled,
ii) whether the clock serves as its own master, or as a slave to another clock selector circuit, and

5. The apparatus according to claim 1 wherein the clock selector circuit comprises:
a first toggle detector (502) for generating an output signal determinative of whether the first external clock signal (Clock_1) has toggled;
a second toggle detector (504) for generating an output signal determinative of whether the second external clock signal (Clock_2) has toggled;
a logic block (506) for providing an output control signal which varies based in part on the output signal of the first and second toggle detectors (502, 504); and
a multiplexer system (510) for selecting among said first and second clock signal (Clock_1, Clock_2), and said oscillator (508) signal, as a common output clock signal for the at least first router in accordance with the logic block (506) output signal.

6. The apparatus according to claim 5 wherein the logic block (506) provides its output control signal based in part on whether at least one of the first and second clock signals (Clock_1, Clock_2) has toggled, and whether the clock serves as its own master, or as a slave to another clock selector circuit.

7. The apparatus according to claim 5 wherein the logic block (506) provides its output control signal based in part on:
i) whether at least one of the first and second clock signals (Clock_1, Clock_2) has toggled,
ii) whether the clock serves as its own master, or as a slave to another clock selector circuit, and
iii) whether the common output clock signal will serve as a primary clock signal.

8. The apparatus according to claim 1 further comprising:
a second clock selector for selecting from among said first and second clock signals, and an oscillator signal, as a common output clock signal, based in part on whether at least one of the first and second clock signals has toggled compared to the oscillator signal.

9. A method for selecting a clock signal, comprising the steps of
detecting a failure of a first clock signal (Clock_1) to toggle
detecting a failure of a second clock signal (Clock_2) to toggle; and
selecting from among the first and second clock signals (Clock_1, Clock_2) and an oscillator (508) signal, based on whether at least one of the first and second clock signals (Clock_1, Clock_2) has toggled compared to the oscillator (508) signal and
if one of the first and second clock signals (Clock_1, Clock_2) has not toggled, then replacing each non-toggling clock signal with a signal at the same fixed logic state.

10. The method according to claim 9 wherein the selecting step further comprises selecting from among said first and second clock signal (Clock_1, Clock_2), and an oscillator (508) signal, as a common output clock signal, based in part on whether the clock serves as its own master or as a slave to another clock selector circuit.

## Patentansprüche

1. Vorrichtung, die umfasst:
eine Taktauswahleinrichtung (506) zum Auswählen zwischen einem ersten und einem zweiten Taktsignal (Clock_1, Clock_2) und dem Signal eines Oszillators (508) als ein gemeinsames Ausgangstaktsignal aufgrund dessen, ob das erste und/oder das zweite Taktsignal (Clock_1, Clock_2) umgeschaltet hat,
ein sicheres Taktmultiplexersystem (502, 504, 510) zum Erfassen, ob sowohl das erste als auch das zweite Taktsignal (Clock_1, Clock_2) gegenüber dem Signal des Oszillators (508) umgeschaltet hat, und wenn nicht, zum Ersetzen jedes nicht umschaltenden Taktsignals (Clock_1, Clock_2) durch ein Signal mit demselben festen Logikzustand.

2. Vorrichtung nach Anspruch 1, bei der die sichere Taktmultiplexerschaltung (502, 504, 510) ein Paar Umschaltdetektoren (502, 504) enthält, die jeweils bestimmen, ob ein getrenntes des ersten und des zweiten Taktsignals (Clock_1, Clock_2) gegenüber dem Signal des Oszillators (508) umgeschaltet hat.

3. Vorrichtung nach Anspruch 1, bei der die Taktauswahlschaltung (506) zwischen dem ersten und dem zweiten Taktsignal (Clock_1, Clock_2) und dem Signal des Oszillators (508) als ein gemeinsames Ausgangstaktsignal teilweise aufgrund dessen, ob das erste und/oder das zweite Taktsignal (Clock_1, Clock_2) umgeschaltet hat, und teilweise aufgrund dessen, ob die Taktauswahlschaltung (506) als ein Master oder als ein Slave für eine andere Taktauswahlschaltung dient, auswählt.

4. Vorrichtung nach Anspruch 1, bei der die Taktauswahlschaltung (506) zwischen dem ersten und dem zweiten Taktsignal (Clock_1, Clock_2) und dem Ausgangssignal des Oszillators (508) als ein gemeinsames Ausgangstaktsignal teilweise aufgrund dessen auswählt:
i) ob das erste und/oder das zweite Taktsignal (Clock_1, Clock_2) umgeschaltet hat,
ii) ob der Takt als sein eigener Master oder als ein Slave für eine andere Taktauswahlschaltung dient, und
iii) ob das gemeinsame Ausgangstaktsignal als ein primäres Taktsignal dient.

5. Vorrichtung nach Anspruch 1, bei der die Taktauswahlschaltung umfasst:
einen ersten Umschaltdetektor (502) zum Erzeugen eines Ausgangssignals, das bestimmt, ob das erste externe Taktsignal (Clock_1) umgeschaltet hat;
einen zweiten Umschaltdetektor (504) zum Erzeugen eines Ausgangssignals, das bestimmt, ob das zweite externe Taktsignal (Clock_2) umgeschaltet hat;
einen Logikblock (506) zum Liefern eines Ausgangssteuersignals, das teilweise aufgrund des Ausgangssignals des ersten und des zweiten Umschaltdetektors (502, 504) variiert; und
ein Multiplexersystem (510) zum Auswählen zwischen dem ersten und dem zweiten Taktsignal (Clock_1, Clock_2) und dem Signal des Oszillators (508) als ein gemeinsames Ausgangstaktsignal für den wenigsten ersten Router in Übereinstimmung mit dem Ausgangssignal des Logikblocks (506).

6. Vorrichtung nach Anspruch 5, bei der der Logikblock (506) sein Ausgangssteuersignal teilweise aufgrund dessen, ob das erste und/oder das zweite Taktsignal (Clock_1, Clock_2) umgeschaltet hat, und teilweise aufgrund dessen, ob der Takt als sein eigener Master oder als ein Slave für eine andere Taktauswahlschaltung dient, liefert.

7. Vorrichtung nach Anspruch 5, bei der der Logikblock (506) sein Ausgangssteuersignal teilweise aufgrund dessen liefert:
i) ob das erste und/oder das zweite Taktsignal (Clock_1, Clock_2) umgeschaltet hat,
ii) ob der Takt als sein eigener Master oder als ein Slave für eine andere Taktauswahlschaltung dient, und
iii) ob das gemeinsame Ausgangstaktsignal als ein primäres Taktsignal dient.

8. Vorrichtung nach Anspruch 1, die ferner umfasst:
eine zweite Taktauswahleinrichtung zum Auswählen zwischen dem ersten und dem zweiten Taktsignal und einem Oszillatorsignal als ein gemeinsames Ausgangstaktsignal teilweise aufgrund dessen, ob das erste und/oder das zweite Taktsignal gegenüber dem Oszillatorsignal umgeschaltet hat.

9. Verfahren zum Auswählen eines Taktsignals, wobei das Verfahren die folgenden Schritte umfasst:
Erfassen des Nichtumschaltens eines ersten Taktsignals (Clock_1),
Erfassen des Nichtumschaltens eines zweiten Taktsignals (Clock_2); und
Auswählen zwischen dem ersten und dem zweiten Taktsignal (Clock_1, Clock_2) und dem Signal eines Oszillators (508) aufgrund dessen, ob das erste und/oder das zweite Taktsignal (Clock_1, Clock_2) gegenüber dem Signal des Oszillators (508) umgeschaltet hat, und
falls das erste oder das zweite Taktsignal (Clock_1, Clock_2) nicht umgeschaltet hat, Ersetzen jedes nicht umschaltenden Taktsignals durch ein Signal auf demselben festen Logikzustand.

10. Verfahren nach Anspruch 9, bei dem der Auswahlschritt ferner das Auswählen zwischen dem ersten und dem zweiten Taktsignal (Clock_1, Clock_2) und dem Signal eines Oszillators (508) als ein gemeinsames Ausgangstaktsignal, teilweise aufgrund dessen, ob der Takt als sein eigener Master oder als ein Slave für eine andere Taktauswahlschaltung dient, umfasst.

## Revendications

1. Appareil comprenant:
un sélecteur d'horloge (506) pour sélectionner parmi des premier et second signaux d'horloge (Clock_1, Clock_2) et
un signal d'oscillateur (508), en tant que signal d'horloge de sortie commun, en fonction du fait qu'au moins un des premier et second signaux d'horloge (Clock_1, Clock_2) a basculé,
un système de multiplexeur d'horloge sûr (502, 504, 510) pour détecter si chacun des premier et second signaux d'horloge (Clock_1, Clock_2) a basculé par rapport au signal d'oscillateur (508), et si ce n'est pas le cas,
remplacer chaque dit signal d'horloge non basculant (Clock_1, Clock_2) par un signal au même état logique fixe.

2. Appareil selon la revendication 1, dans lequel le circuit de multiplexeur d'horloge sûr (502, 504, 510) inclut une paire de détecteurs de basculement (502, 504) déterminant chacun si un signal séparé des premier et second signaux d'horloge (Clock_1, Clock_2) a basculé par rapport au signal d'oscillateur (508).

3. Appareil selon la revendication 1, dans lequel le circuit de sélecteur d'horloge (506) sélectionne parmi lesdits premier et second signaux d'horloge (Clock_1, Clock_2) et le signal d'oscillateur (508), en tant que signal d'horloge de sortie commun, en fonction en partie du fait qu'au moins un des premier et second signaux d'horloge (Clock_1, Clock_2) a basculé et que le circuit de sélecteur d'horloge (506) sert de maître ou d'esclave à un autre circuit de sélecteur d'horloge.

4. Appareil selon la revendication 1, dans lequel le circuit de sélecteur d'horloge (506) sélectionne parmi lesdits premier et second signaux d'horloge (Clock_1, Clock_2) et le signal de sortie d'oscillateur (508), en tant que signal d'horloge de sortie commun, en fonction en partie du fait:
i) qu'au moins un des premier et second signaux d'horloge (Clock_1, Clock_2) a basculé,
ii) que l'horloge sert de son propre maître ou d'esclave à un autre circuit de sélecteur d'horloge, et
iii) que le signal d'horloge de sortie commun servira de signal d'horloge primaire.

5. Appareil selon la revendication 1, dans lequel le circuit de sélecteur d'horloge comprend:
un premier détecteur de basculement (502) pour générer un signal de sortie déterminant si le premier signal d'horloge externe (Clock_1) a basculé;
un second détecteur de basculement (504) pour générer un signal de sortie déterminant si le second signal d'horloge externe (Clock_2) a basculé;
un bloc logique (506) pour fournir un signal de commande de sortie qui varie en fonction en partie du signal de sortie des premier et second détecteurs de basculement (502, 504); et
un système de multiplexeur (510) pour sélectionner parmi lesdits premier et second signaux d'horloge (Clock_1, Clock_2) et ledit signal d'oscillateur (508), en tant que signal d'horloge de sortie commun pour l'au moins premier routeur en fonction du signal de sortie du bloc logique (506).

6. Appareil selon la revendication 5, dans lequel le bloc logique (506) fournit son signal de commande de sortie en fonction en partie du fait qu'au moins un des premier et second signaux d'horloge (Clock_1, Clock_2) a basculé, et que l'horloge sert de son propre maître ou d'esclave à un autre circuit de sélecteur d'horloge.

7. Appareil selon la revendication 5, dans lequel le bloc logique (506) fournit son signal de commande de sortie en fonction en partie du fait:
i) qu'au moins un des premier et second signaux d'horloge (Clock_1, Clock_2) a basculé,
ii) que l'horloge sert de son propre maître ou d'esclave à un autre circuit de sélecteur d'horloge, et
iii) que le signal d'horloge de sortie commun servira de signal d'horloge primaire.

8. Appareil selon la revendication 1, comprenant en outre:
un second sélecteur d'horloge pour sélectionner parmi lesdits premier et second signaux d'horloge et un signal d'oscillateur, en tant que signal d'horloge de sortie commun, en fonction en partie du fait qu'au moins un des premier et second signaux d'horloge a basculé par rapport au signal d'oscillateur.

9. Procédé de sélection d'un signal d'horloge, comprenant les étapes consistant à
détecter une panne d'un premier signal d'horloge (Clock_1) devant basculer;
détecter une panne d'un second signal d'horloge (Clock_2) devant basculer; et
sélectionner parmi les premier et second signaux d'horloge (Clock_1, Clock_2) et un signal d'oscillateur (508) en fonction du fait qu'au moins un des premier et second signaux d'horloge (Clock_1, Clock_2) a basculé par rapport au signal d'oscillateur (508) et
si un des premier et second signaux d'horloge (Clock_1, Clock_2) n'a pas basculé, alors remplacer chaque signal d'horloge non basculant par un signal au même état logique fixe.

10. Procédé selon la revendication 9, dans lequel l'étape de sélection comprend en outre la sélection parmi lesdits premier et second signaux d'horloge (Clock_1, Clock_2) et un signal d'oscillateur (508), en tant que signal d'horloge de sortie commun, en fonction en partie du fait que l'horloge sert de son propre maître ou d'esclave à un autre circuit de sélecteur d'horloge.
